# EUROPÄISCHE PATENTANMELDUNG

(11) **EP 4 238 902 A1**
(43) Veröffentlichungstag der Anmeldung: **06.09.2023**
(21) Anmeldenummer: 22160001.8
(22) Anmeldetag: 03.03.2022
(51) Int. Cl.: B65G 1/04, B65G 1/06, B65G 1/137

(54) **BLOCKLAGERANORDNUNG**

(71) Anmelder: Jungheinrich Aktiengesellschaft, 22047 Hamburg (DE)
(72) Erfinder: Becker, Michael, 63512 Hainburg (DE); Cavelius, Jörg, 61118 Bad Vilbel (DE); Morawietz, Timm, 66636 Tholey-Überroth (DE); Liebhaber, Markus, 61440 Oberursel (DE)
(74) Vertreter: Keil & Schaafhausen Patentanwälte PartGmbB

(57) **Zusammenfassung**

Es wird eine Blocklageranordnung (1) angegeben mit einer Mehrzahl von Behälteraufnahmeräumen (2), einem in Schwerkraftrichtung unterhalb der Behälteraufnahmeräume (2) angeordneten Beschickungsraum (3) und mindestens einem Beschickungsfahrzeug (4), das im Beschickungsraum (3) verfahrbar ist und mit dem Behälter (5) in die Behälteraufnahmeräume (2) eingelagert und aus den Behälteraufnahmeräumen (2) entnommen werden können.

Man möchte den Betrieb einer Blocklageranordnung zuverlässig gestalten können.

Hierzu ist vorgesehen, dass die Blocklageranordnung (1) einen Beschickungsfahrzeug-Wartungsbereich (8) aufweist, der mit dem Beschickungsraum (3) über eine Fahrstrecke verbunden ist.

## Beschreibung

Die vorliegende Erfindung betrifft eine Blocklageranordnung mit einer Mehrzahl von Behälteraufnahmeräumen, einem in Schwerkraftrichtung unterhalb der Behälteraufnahmeräume angeordneten Beschickungsraum und mindestens einem Beschickungsfahrzeug, das im Beschickungsraum verfahrbar ist und mit dem Behälter in die Behälteraufnahmeräume eingelagert und aus den Behälteraufnahmeräumen entnommen werden können.

In einer derartigen Blocklageranordnung können viele Behälter platzsparend gelagert werden. Die Behälter können in den Behälteraufnahmeräumen in Form von Stapeln gelagert werden. Da die Behälter dort unmittelbar aufeinander aufstehen, ergibt sich in Schwerkraftrichtung eine große Packungsdichte der Behälter. Die Behälteraufnahmeräume selbst können in horizontaler Richtung ebenfalls relativ dicht benachbart sein, so dass sich auch hier eine relativ hohe Packungsdichte der Behälter ergibt. Da die Behälter von unten in einen Behälteraufnahmeraum eingelagert werden und auch nach unten aus dem Behälteraufnahmeraum entnommen werden, ist die Zeit, die man zum Zugriff auf den jeweils zu entnehmenden Behälter benötigt, relativ kurz.

Zum Einlagern eines Behälters in einen Behälteraufnahmeraum und zum Entnehmen eines Behälters aus dem Behälteraufnahmeraum wird das Beschickungsfahrzeug verwendet. Das Beschickungsfahrzeug kann einerseits in eine Position verfahren werden, in der es sich unter einem Behälteraufnahmeraum befindet, um einen Behälter einzulagern oder ihn zu entnehmen. Es weist andererseits eine Hubeinrichtung auf, mit der ein Behälter angehoben werden kann, um ihn in den Behälteraufnahmeraum einzulagern, oder abgesenkt werden kann, um einen Behälter aus dem Behälteraufnahmeraum zu entnehmen.

Der Erfindung liegt die Aufgabe zugrunde, den Betrieb einer Blocklageranordnung zuverlässig zu gestalten.

Diese Aufgabe wird bei einer Blocklageranordnung der eingangs genannten Art dadurch gelöst, dass die Blocklageranordnung einen Beschickungsfahrzeug-Wartungsbereich aufweist, der mit dem Beschickungsraum über eine Fahrstrecke verbunden ist.

Der Beschickungsfahrzeug-Wartungsbereich, der im Folgenden kurz als "Wartungsbereich" bezeichnet wird, bildet einen Wartungsbahnhof für das Beschickungsfahrzeug, in dem das Beschickungsfahrzeug inspiziert und ggfs. repariert werden kann. Der Wartungsbereich ist dabei vorzugsweise so dimensioniert, dass er alle in der Blocklageranordnung vorgesehenen Beschickungsfahrzeuge aufnehmen kann. Der Wartungsbereich kann dann beispielsweise zu Sicherungszwecken verwendet werden. Wenn es notwendig wird, dass eine Wartungsperson die Blocklageranordnung betritt, werden alle Beschickungsfahrzeuge in den Wartungsbereich verfahren und können eine Wartungsperson in der Blocklageranordnung dann nicht mehr gefährden.

Vorzugsweise ist der Wartungsbereich quer zur Schwerkraftrichtung seitlich neben dem Beschickungsraum angeordnet. Insbesondere kann vorgesehen sein, dass der Wartungsbereich an den Beschickungsraum angrenzt. Der Wartungsbereich setzt dann den Beschickungsraum seitlich fort, wobei der Wartungsbereich durchaus eine andere Höhe in Schwerkraftrichtung als der Beschickungsraum haben kann. Mit dieser Anordnung ergibt sich eine sehr platzsparende Anordnung des Wartungsbereichs. Auch werden Fahrstrecken für das Beschickungsfahrzeug von dem Beschickungsraum in den Wartungsbereich kleingehalten.

Vorzugsweise sind die Behälteraufnahmeräume und der Beschickungsraum von einer gemeinsamen Hülle umgeben und der Wartungsbereich ist innerhalb der Hülle angeordnet. Die Hülle kann aus Brandschutzgründen vorgesehen sein. Innerhalb der Hülle kann man eine Atmosphäre vorrätig halten, die beispielsweise sauerstoffreduziert ist, so dass sich ein Feuer nicht oder nur schwer entwickeln kann. Wenn der Wartungsbereich ebenfalls innerhalb der Hülle angeordnet ist, dann kann man bei Auftreten oder bereits bei vermutetem Auftreten einer Brandsituation das Beschickungsfahrzeug oder die Beschickungsfahrzeuge aus dem Beschickungsraum in den Wartungsbereich verfahren, ohne dass das Risiko eines Sauerstoffeintrags besteht.

Vorzugsweise weist die Hülle im Bereich des Wartungsbereichs ein Fenster auf. Eine Wartungsperson kann dann das im Wartungsbereich befindliche Beschickungsfahrzeug optisch inspizieren. Eine Brandgefahr geht bei der Blocklageranordnung hauptsächlich von dem Beschickungsfahrzeug oder den Beschickungsfahrzeugen aus. Die Wartungsperson kann dann unmittelbar erkennen, ob sich bei einem Beschickungsfahrzeug eine Rauchentwicklung zeigt.

Vorzugsweise ist zwischen dem Wartungsbereich und dem Beschickungsraum eine Schleuseneinrichtung angeordnet. Die Schleuseneinrichtung bildet dann eine Sperre zwischen dem Wartungsbereich und dem Beschickungsraum, so dass man die Atmosphären von Wartungsbereich und Beschickungsraum getrennt voneinander behalten kann.

Vorzugsweise weist der Wartungsbereich eine Höhe auf, die einer Erstreckung des Beschickungsfahrzeugs in Schwerkraftrichtung zuzüglich eines Arbeitsraumes entspricht. Damit kann eine Wartungsperson das Beschickungsfahrzeug auch von oben inspizieren und handhaben. Der Wartungsbereich ist damit in der Regel auch höher als der Beschickungsraum. Der Beschickungsraum ist in der Regel nur etwas höher als das Beschickungsfahrzeug. Man macht den Beschickungsraum so niedrig wie möglich, um möglichst wenig Platz für den Beschickungsraum zu verwenden.

Vorzugsweise weist der Wartungsbereich eine Höhe von mindestens 1,8 m auf. Damit ist es für die meisten Wartungspersonen möglich, den Wartungsbereich in aufrechter Position zu betreten, so dass eine angenehme Arbeitshaltung beim Warten des Beschickungsfahrzeugs oder der Beschickungsfahrzeuge ermöglicht wird.

Vorzugsweise ist der Wartungsbereich durch eine gesicherte Zugangstür abgeschlossen. Damit kann man verhindern, dass eine Wartungsperson beispielsweise dann den Wartungsbereich betritt, wenn gerade ein Beschickungsfahrzeug in den Wartungsbereich einfährt.

Vorzugsweise ist ein Rauchdetektor vorgesehen, der mit einer Steuereinrichtung verbunden ist, die im Fall eines vom Rauchdetektor erzeugten Raucherkennungssignals das Beschickungsfahrzeug in den Wartungsbereich steuert. Wenn also beispielsweise Rauch detektiert wird, was durch ein Rauchansaugsystem möglich ist, dann werden die Beschickungsfahrzeuge automatisch in den Wartungsbereich gebracht. Somit steht kein Beschickungsfahrzeug mehr unterhalb der Behälteraufnahmeräume. Hier bilden die in den Behälteraufnahmeräumen aufgenommenen Behälter eine potentielle Brandmasse.

Auch kann ein Temperatursensor vorgesehen sein, der mit einer Steuereinrichtung verbunden ist, die im Fall einer vom Temperatursensor erfassten Temperatur, die einen vorbestimmten Schwellenwert überschreitet, das Beschickungsfahrzeug in den Wartungsbereich steuert. Der Temperatursensor, der auch allgemein als "Brandmelder" bezeichnet werden kann, erfasst, ob sich eine unzulässig hohe Temperatur einstellt, die auf ein Feuer oder einen sich entwickelnden Brand in der Blocklageranordnung hinweist. Auch in diesem Fall werden die Beschickungsfahrzeuge sofort aus dem Beschickungsraum herausgefahren, so dass die Wahrscheinlichkeit kleingehalten wird, dass es vom Beschickungsfahrzeug zu einem Übergriff von Feuer auf die darüber liegenden Behälter mit darin eingelagerten Waren kommt. Das Beschickungsfahrzeug ist im Wartungsbereich im direkten Zugriff für die Feuerwehr.

Vorzugsweise ist die Fahrstrecke durch eine Schienenanordnung gebildet. Die Schienenanordnung kann also vom Beschickungsraum in den Wartungsbereich verlaufen.

Bevorzugterweise ist die Schienenanordnung durch eine gradlinige Verlängerung von Schienen gebildet, auf denen das Beschickungsfahrzeug im Beschickungsraum verfahrbar ist. Ein Umsetzen des Beschickungsfahrzeugs von einem Schienensystem auf ein anderes Schienensystem, um es in den Wartungsbereich zu verfahren, ist damit nicht mehr nötig.

Vorzugsweise ist eine Ladestation im Wartungsbereich vorgesehen. Die Ladestation kann eine aufladbare Batterie im Beschickungsfahrzeug aufladen, wenn sich das Beschickungsfahrzeug im Wartungsbereich befindet.

Vorzugsweise weist der Wartungsbereich eine Hebeeinrichtung auf, deren Endlast größer ist als eine Masse des Beschickungsfahrzeugs. Die Hebeeinrichtung kann beispielsweise als Laufkatze oder Kran ausgebildet sein, so dass man ein Beschickungsfahrzeug im Beschickungsraum auf die Schienen setzen oder zu Reparaturzwecken anheben kann.

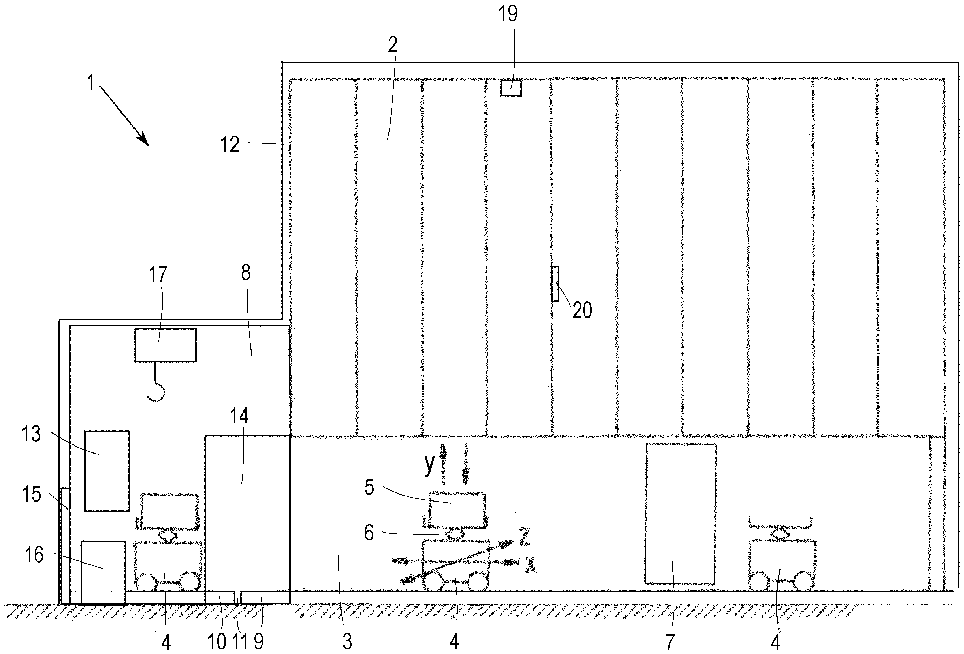

Die Erfindung wird im Folgenden anhand eines bevorzugten Ausführungsbeispiels in Verbindung mit der Zeichnung beschrieben. Hierin zeigt die einzige Fig.: eine schematische Darstellung einer Blocklageranordnung. Eine Blocklageranordnung 1 weist eine Mehrzahl von Behälteraufnahmeräumen 3 auf. In jedem Behälteraufnahmeraum kann ein Stapel von Behältern aufgenommen werden. In Schwerkraftrichtung unterhalb der Behälteraufnahmeräume 2 ist ein Beschickungsraum 3 angeordnet. In dem Beschickungsraum 3 sind mehrere Beschickungsfahrzeuge 4 verfahrbar. Die Beschickungsfahrzeuge 4 dienen dazu, einen Behälter 5 in einen Behälteraufnahmeraum 2 einzulagern oder den Behälter 5 aus dem Behälteraufnahmeraum 2 zu entnehmen. Hierzu weist das Beschickungsfahrzeug 4 eine Hubeinrichtung 6 auf, so dass der Behälter 5 in Schwerkraftrichtung angehoben oder abgesenkt werden kann, wie dies durch Pfeile y dargestellt ist.

Die Behälteraufnahmeräume 2 sind in einer Reihe nebeneinander angeordnet, die sich in eine Richtung "X" erstreckt. Mehrere derartige Reihen sind senkrecht dazu nebeneinander angeordnet. Dies ist durch die Richtung "Z" dargestellt. Die Beschickungsfahrzeuge 4 sind sowohl in Richtung der Reihen, also in X-Richtung, als auch quer dazu, also in Z-Richtung, verfahrbar.

Der Beschickungsraum 3 weist eine Tür 7 auf, durch die eine Wartungsperson in den Beschickungsraum 3 eintreten kann.

Die Blocklageranordnung 1 weist einen Beschickungsfahrzeug-Wartungsbereich 8 auf, der im Folgenden einfach als "Wartungsbereich 8" bezeichnet wird. Der Wartungsbereich 8 ist mit dem Beschickungsraum 3 über eine Fahrstrecke verbunden, die im vorliegenden Fall durch eine Schienenanordnung 9, 10 gebildet ist. Die Schienenanordnung 9, 10 weist erste Schienen 9 auf, die sich in den Beschickungsraum 3 erstrecken, und zweite Schienen 10, die sich nur im Wartungsbereich 8 befinden. Um dies deutlich zu machen, weist die Schienenanordnung 9, 10 eine Lücke 11 auf. Dies ist aber nicht notwendig. Die Schienenanordnung 9, 10 kann auch durch durchgehende Schienen gebildet sein.

Der Wartungsbereich 8 ist quer zur Schwerkraftrichtung seitlich neben dem Beschickungsraum 3 angeordnet und grenzt an den Beschickungsraum 3 an. Das Beschickungsfahrzeug 4 kann also unmittelbar vom Beschickungsraum 3 in den Wartungsbereich 8 übertreten, ohne längere Strecken zurücklegen zu müssen.

Die Behälteraufnahmeräume 2 und der Beschickungsraum 3 können von einer gemeinsamen Hülle 12 umgeben sein. Die Hülle 12 schließt auch den Wartungsbereich 8 ein, der Wartungsbereich 8 ist also innerhalb der Hülle 12 angeordnet. Die oben erwähnte Tür 7 ermöglicht den Durchtritt einer Wartungsperson durch die Hülle 12. Die Hülle 12 wird bei Systemen benötigt, die durch Sauerstoffreduzierung gegen ein Brandrisiko geschützt sind.

Bei anderen Arten von Löschsystemen kann eine Hülle entbehrlich sein. In diesem Fall können die Behälteraufnahmeräume 2 und der Beschickungsraum 3 von einem Schutzzaun oder einer ähnlichen Verkleidung umgeben sein, was durch den Begriff "Hülle" ebenfalls umfasst ist. Der Wartungsbereich 8 kann auch bei Systemen mit Wasserlöschanlagen (Sprinkler) zum Einsatz kommen um das Risiko des Überspringens von Flammen auf die Behälter zu vermeiden.

Die Hülle 12 weist im Bereich des Wartungsbereichs 8 ein Fenster 13 auf. Dieses Fenster 13 ist hier aus Gründen der Übersicht in einer Wand angeordnet, die sich parallel zu den Reihen der Behälteraufnahmeräume 2 erstreckt. Das Fenster 13 kann aber auch in einer anderen Wand angeordnet sein. Das Fenster 13 ermöglicht es, von außen in den Wartungsbereich 8 hineinzublicken, beispielsweise, um zu erkennen, ob hier irgendwelche ungewöhnlichen Situationen vorliegen. Man kann z.B. feststellen, ob ein im Wartungsbereich 8 befindliches Beschickungsfahrzeug 4 eine Rauchentwicklung zeigt.

Zwischen dem Wartungsbereich 8 und dem Beschickungsraum 3 ist eine Schleuseneinrichtung 14 anaeordnet. Die Schleuseneinrichtung 14 kann verwendet werden, um die Atmosphäre im Beschickungsraum 3 von der Atmosphäre im Wartungsbereich 8 zu trennen. Dies ist beispielsweise dann von Vorteil, wenn man im Beschickungsraum 3 und in den Behälteraufnahmeräumen 2 eine Atmosphäre mit reduziertem Sauerstoffgehalt vorhalten möchte, was aus Brandschutzgründen vielfach gewünscht ist, im Wartungsbereich 8 aber den normalen Sauerstoffgehalt der Umgebungsluft zulassen möchte.

Um einen Eintritt einer Wartungsperson in den Wartungsbereich zu ermöglichen, ist eine gesicherte Zugangstür 15 vorgesehen, die den Wartungsbereich 8 nach außen abschließt. Die Zugangstür 15 ist hier mit einer relativ geringen Höhe dargestellt. Sie kann aber höher sein.

Der Wartungsbereich 8 weist in Schwerkraftrichtung eine Höhe auf, die deutlich größer ist als eine Erstreckung des Beschickungsfahrzeugs 4 in Schwerkraftrichtung. Oberhalb des Beschickungsfahrzeugs 4 ist ein Arbeitsraum vorgesehen, so dass eine Wartungs- oder Bedienungsperson auch von oben Zugriff auf das Beschickungsfahrzeug 4 hat, beispielsweise, um dort Reparaturen vornehmen zu können.

Der Wartungsbereich hat in Schwerkraftrichtung eine Höhe von mindestens 1,8 m. Damit ist er für die meisten Wartungspersonen in aufrechter Stellung begehbar.

Im Wartungsbereich 8 ist weiterhin eine Ladestation 16 vorgesehen, mit der eine aufladbare Batterie des Beschickungsfahrzeugs 4 geladen werden kann, wenn sich das Beschickungsfahrzeug 4 im Wartungsbereich 8 befindet.

Der Wartungsbereich 8 weist weiterhin eine Hebeeinrichtung 17 auf, die beispielsweise als Laufkatze oder als Kran ausgebildet sein kann. Mit der Hebeeinrichtung 17 kann man das Beschickungsfahrzeug 4 anheben, um es auf die Schienen 10 setzen zu können.

Der Wartungsbereich 8 hat vorzugsweise senkrecht zu der Reihe der Behälteraufnahmeräume 2 (also senkrecht zur Zeichenebene nach der Fig.) eine Erstreckung, die der Erstreckung aller Behälteraufnahmeräume 2 in Z-Richtung entspricht. Damit hat der Wartungsbereich 8 eine relativ große Größe, so dass man vorzugsweise alle Beschickungsfahrzeuge 4, die in der Blocklageranordnung 1 vorhanden sind, in den Beschickungsraum 8 verfahren kann, wenn dies notwendig sein sollte.

Die Blocklageranordnung 1 weist einen Rauchdetektor 19 auf, der ein Raucherkennungssignal erzeugt, wenn er einen Rauch detektiert. Dieses Raucherkennungssignal kann an das Beschickungsfahrzeug 4 oder die Beschickungsfahrzeuge 4 weitergeleitet werden. Jedes Beschickungsfahrzeug 4 weist in diesem Fall eine Steuereinrichtung auf, die das Beschickungsfahrzeug 4 in den Wartungsbereich 8 steuert, sobald sie das Raucherkennungssignal empfängt.

Ein Rauch kann beispielsweise dann entstehen, wenn sich ein Beschickungsfahrzeug 4 im Betrieb überhitzt. Wenn man bei Auftreten eines Rauchsignals durch den Rauchdetektor 19 die Beschickungsfahrzeuge 4 in den Wartungsbereich fährt, erreicht man zwei Vorteile. Zum einen werden die Beschickungsfahrzeuge 4 unter den in den Behälteraufnahmeräumen 2 gelagerten Behältern weggefahren, also von einer potenziellen Brandmasse entfernt. Zum anderen kann man auf diese Weise erkennen, ob der Rauch von einem Beschickungsfahrzeug 4 stammt oder von einem Behälter oder einem in einem Behälter aufgenommenen Gegenstand. Damit lassen sich Brandbekämpfungsmaßnahmen wirkungsvoll steuern.

Der Rauchdetektor 19 ist hier an einem oberen Ende eines Beschickungsraums 2 angeordnet. Dies ist jedoch nicht zwingend. Der Rauchdetektor 19 kann auch an einer anderen Position angeordnet sein.

Weiterhin weist die Blocklageranordnung einen Temperatursensor 20 auf, der ein Temperatursignal erzeugt, wenn er eine Temperatur ermittelt, die über einen vorbestimmten Sollwert hin angestiegen ist. Dieses Temperatursignal kann ebenfalls an eine Steuereinrichtung im Beschickungsfahrzeug 4 übermittelt werden, die dann ebenfalls das Beschickungsfahrzeug 4 in den Wartungsbereich 8 verfährt. Hier gilt das Gleiche wie für das Raucherkennungssignal. Wenn das Beschickungsfahrzeug 4 aus dem Beschickungsraum 3 herausgefahren worden ist, befindet es sich nicht mehr unterhalb einer potenziellen Brandmasse, die durch die in den Behälteraufnahmeräumen 2 angeordneten Behälter und die darin befindlichen Gegenstände gebildet wird. Außerdem kann man dann relativ schnell ermitteln, ob die erhöhte Temperatur von einem Beschickungsfahrzeug 4 herrührt oder von den Behältern oder den darin aufgenommenen Waren.

## Patentansprüche

1. Blocklageranordnung (1) mit einer Mehrzahl von Behälteraufnahmeräumen (2), einem in Schwerkraftrichtung unterhalb der Behälteraufnahmeräume (2) angeordneten Beschickungsraum (3) und mindestens einem Beschickungsfahrzeug (4), das im Beschickungsraum (3) verfahrbar ist und mit dem Behälter (5) in die Behälteraufnahmeräume (2) eingelagert und aus den Behälteraufnahmeräumen (2) entnommen werden können, **dadurch gekennzeichnet, dass** die Blocklageranordnung (1) einen Beschickungsfahrzeug-Wartungsbereich (8) aufweist, der mit dem Beschickungsraum (3) über eine Fahrstrecke verbunden ist.

2. Blocklageranordnung nach Anspruch 1, **dadurch gekennzeichnet, dass** der Wartungsbereich (8) quer zu Schwerkraftrichtung seitlich neben dem Beschickungsraum (3) angeordnet ist.

3. Blocklageranordnung nach Anspruch 2, **dadurch gekennzeichnet, dass** der Wartungsbereich (8) an den Beschickungsraum (3) angrenzt.

4. Blocklageranordnung nach einem der Ansprüche 1 bis 3, **dadurch gekennzeichnet, dass** die Behälteraufnahmeräume (2) und der Beschickungsraum (3) von einer gemeinsamen Hülle (12) umgeben sind und der Wartungsbereich (8) innerhalb der Hülle (12) angeordnet ist.

5. Blocklageranordnung nach Anspruch 4, **dadurch gekennzeichnet, dass** die Hülle (12) im Bereich des Wartungsbereichs (8) ein Fenster (13) aufweist.

6. Blocklageranordnung nach einem der Ansprüche 1 bis 5, **dadurch gekennzeichnet, dass** zwischen dem Wartungsbereich (8) und dem Beschickungsraum (3) eine Schleuseneinrichtung (14) angeordnet ist.

7. Blocklageranordnung nach einem der Ansprüche 1 bis 6, **dadurch gekennzeichnet, dass** der Wartungsbereich (8) eine Höhe aufweist, die einer Erstreckung des Beschickungsfahrzeugs (4) in Schwerkraftrichtung zuzüglich eines Arbeitsraums entspricht.

8. Blocklageranordnung nach einem der Ansprüche 1 bis 7, **dadurch gekennzeichnet, dass** der Wartungsbereich eine (8) Höhe von mindestens 1,80 m aufweist.

9. Blocklageranordnung nach einem der Ansprüche 1 bis 8, **dadurch gekennzeichnet, dass** der Wartungsbereich (8) durch eine gesicherte Zugangstür (15) abgeschlossen ist.

10. Blocklageranordnung nach einem der Ansprüche 1 bis 9, **dadurch gekennzeichnet, dass** ein Rauchdetektor (19) vorgesehen ist, der mit einer Steuereinrichtung verbunden ist, die im Fall eines vom Rauchdetektor (19) erzeugten Raucherkennungssignals das Beschickungsfahrzeug (4) in den Wartungsbereich (8) steuert.

11. Blocklageranordnung nach einem der Ansprüche 1 bis 10, **dadurch gekennzeichnet, dass** ein Temperatursensor (20) vorgesehen ist, der mit einer Steuereinrichtung verbunden ist, die im Fall einer vom Temperatursensor erfassten Temperatur, die einen vorbestimmten Schwellenwert überschreitet, das Beschickungsfahrzeug (4) in den Wartungsbereich (8) steuert.

12. Blocklageranordnung nach einem der Ansprüche 1 bis 11, **dadurch gekennzeichnet, dass** die Fahrstrecke durch eine Schienenanordnung (9, 10) gebildet ist.

13. Blocklageranordnung nach Anspruch 12, **dadurch gekennzeichnet, dass** die Schienenanordnung (9, 10) durch eine geradlinige Verlängerung von Schienen gebildet ist, auf denen das Beschickungsfahrzeug (4) im Beschickungsraum (3) verfahrbar ist.

14. Blocklageranordnung nach einem der Ansprüche 1 bis 13, **dadurch gekennzeichnet, dass** eine Ladestation (16) im Wartungsbereich (8) vorgesehen ist.

15. Blocklageranordnung nach einem der Ansprüche 1 bis 14, **dadurch gekennzeichnet, dass** der Wartungsbereich (8) eine Hubeinrichtung (17) aufweist, deren Nennlast größer ist als eine Masse des Beschickungsfahrzeugs (4).

## Geänderte Patentansprüche

### Geänderte Patentansprüche gemäss Regel 137(2) EPÜ.

1. Blocklageranordnung (1) mit einer Mehrzahl von Behälteraufnahmeräumen (2), einem in Schwerkraftrichtung unterhalb der Behälteraufnahmeräume (2) angeordneten Beschickungsraum (3) und mindestens einem Beschickungsfahrzeug (4), das im Beschickungsraum (3) verfahrbar ist und mit dem Behälter (5) in die Behälteraufnahmeräume (2) eingelagert und aus den Behälteraufnahmeräumen (2) entnommen werden können, **dadurch gekennzeichnet, dass** die Blocklageranordnung (1) einen Beschickungsfahrzeug-Wartungsbereich (8) aufweist, der mit dem Beschickungsraum (3) über eine Fahrstrecke verbunden ist, wobei der Wartungsbereich (8) durch eine gesicherte Zugangstür (15) abgeschlossen ist.

2. Blocklageranordnung nach Anspruch 1, **dadurch gekennzeichnet, dass** der Wartungsbereich (8) quer zu Schwerkraftrichtung seitlich neben dem Beschickungsraum (3) angeordnet ist.

3. Blocklageranordnung nach Anspruch 2, **dadurch gekennzeichnet, dass** der Wartungsbereich (8) an den Beschickungsraum (3) angrenzt.

4. Blocklageranordnung nach einem der Ansprüche 1 bis 3, **dadurch gekennzeichnet, dass** die Behälteraufnahmeräume (2) und der Beschickungsraum (3) von einer gemeinsamen Hülle (12) umgeben sind und der Wartungsbereich (8) innerhalb der Hülle (12) angeordnet ist.

5. Blocklageranordnung nach Anspruch 4, **dadurch gekennzeichnet, dass** die Hülle (12) im Bereich des Wartungsbereichs (8) ein Fenster (13) aufweist.

6. Blocklageranordnung nach einem der Ansprüche 1 bis 5, **dadurch gekennzeichnet, dass** zwischen dem Wartungsbereich (8) und dem Beschickungsraum (3) eine Schleuseneinrichtung (14) angeordnet ist.

7. Blocklageranordnung nach einem der Ansprüche 1 bis 6, **dadurch gekennzeichnet, dass** der Wartungsbereich (8) eine Höhe aufweist, die einer Erstreckung des Beschickungsfahrzeugs (4) in Schwerkraftrichtung zuzüglich eines Arbeitsraums entspricht.

8. Blocklageranordnung nach einem der Ansprüche 1 bis 7, **dadurch gekennzeichnet, dass** der Wartungsbereich eine (8) Höhe von mindestens 1,80 m aufweist.

9. Blocklageranordnung nach einem der Ansprüche 1 bis 8, **dadurch gekennzeichnet, dass** ein Rauchdetektor (19) vorgesehen ist, der mit einer Steuereinrichtung verbunden ist, die im Fall eines vom Rauchdetektor (19) erzeugten Raucherkennungssignals das Beschickungsfahrzeug (4) in den Wartungsbereich (8) steuert.

10. Blocklageranordnung nach einem der Ansprüche 1 bis 9, **dadurch gekennzeichnet, dass** ein Temperatursensor (20) vorgesehen ist, der mit einer Steuereinrichtung verbunden ist, die im Fall einer vom Temperatursensor erfassten Temperatur, die einen vorbestimmten Schwellenwert überschreitet, das Beschickungsfahrzeug (4) in den Wartungsbereich (8) steuert.

11. Blocklageranordnung nach einem der Ansprüche 1 bis 10, **dadurch gekennzeichnet, dass** die Fahrstrecke durch eine Schienenanordnung (9, 10) gebildet ist.

12. Blocklageranordnung nach Anspruch11, **dadurch gekennzeichnet, dass** die Schienenanordnung (9, 10) durch eine geradlinige Verlängerung von Schienen gebildet ist, auf denen das Beschickungsfahrzeug (4) im Beschickungsraum (3) verfahrbar ist.

13. Blocklageranordnung nach einem der Ansprüche 1 bis 12, **dadurch gekennzeichnet, dass** eine Ladestation (16) im Wartungsbereich (8) vorgesehen ist.

14. Blocklageranordnung nach einem der Ansprüche 1 bis 13, **dadurch gekennzeichnet, dass** der Wartungsbereich (8) eine Hubeinrichtung (17) aufweist, deren Nennlast größer ist als eine Masse des Beschickungsfahrzeugs (4).
